# EUROPÄISCHE PATENTSCHRIFT

(11) **EP 0 811 926 B1**
(45) Veröffentlichungstag und Bekanntmachung des Hinweises auf die Patenterteilung: **26.12.2007**
(21) Anmeldenummer: 97108090.8
(22) Anmeldetag: 17.05.1997
(51) Int. Cl.: G06F 13/38, G06F 13/22, G06F 13/10

(54) **Verfahren, Anlage und Unterstation zur Übertragung von Information- und Steuerdaten**
Method, apparatus and substation for transmission of information and control data
Méthode, dispositif et sous-station de transfert de données d'information et de commande

(30) Priorität: 05.06.1996 DE 19622531
(43) Veröffentlichungstag der Anmeldung: 10.12.1997
(73) Patentinhaber: Deutsche Telekom AG, 53113 Bonn (DE)
(72) Erfinder: Jakobi, Rolf, 56357 Nochern (DE)

(56) Entgegenhaltungen:
- US-A- 4 800 523
- US-A- 5 465 364
- PFEIFFER; HÄBERLE: "Feldbus-Funktionsbibliothek" 1995 , VDMA , FRANKFURT XP002267253 2 * Absatz [0002] * * Absatz [4.3.2] * * Absatz [4.3.4] * * Absatz [4.3.5] * * Absatz [4.3.6.3] * * Absatz [04.6] *
- BORLA-SALAMET P ET AL: "Compiling control into database queries for parallel execution management" , PARALLEL AND DISTRIBUTED INFORMATION SYSTEMS, 1991., PROCEEDINGS OF THE FIRST INTERNATIONAL CONFERENCE ON MIAMI BEACH, FL, USA 4-6 DEC. 1991, LOS ALAMITOS, CA, USA,IEEE COMPUT. SOC, US, PAGE(S) 271-279 XP010025434 ISBN: 0-8186-2295-4 * Gesamtes Dokument *
- CHARRUE P ET AL: "INTEGRATING FIELDBUSES AT THE APPLICATION LEVEL: C INTERFACE AND LABVIEW INTEGRATION" FIELDCOMMS EUROPE. THE INDUSTRIAL NETWORKING SHOW AND CONFERENCE, XX, XX, 8. Oktober 1996 (1996-10-08), Seiten 61-63, XP009021389
- PRITSCHOW G ET AL: "EINHEITLICHE ANWENDERSCHNITTSTELLE FUER FELDBUSSYSTEME COMMON APPLICATION PROGRAM INTERFACE TO FIELDBUS" AUTOMATISIERUNGSTECHNISCHE PRAXIS - ATP, OLDENBOURG VERLAG. MUNCHEN, DE, Bd. 38, Nr. 12, Dezember 1996 (1996-12), Seiten 46-49, XP009021388 ISSN: 0178-2320

## Beschreibung

Die Erfindung betrifft ein Verfahren zur Übertragung von Informations- und/oder Steuerdaten zwischen einer Unterstation und daran angeschalteten Geräten, wie z. B. Automationsgeräten zur Überwachung und Steuerung von Heizungsanlagen, Lichtanlagen usw. in einer betriebstechnischen Anlage, wobei die angeschalteten Geräte über spezifische, d. h. herstellerabhängige, Protokolle mit der Unterstation kommunizieren. Darüber hinaus bezieht sich die Erfindung auf eine Anlage zur Durchführung des Verfahrens sowie eine Unterstation für den Einsatz in einer solchen Anlage.

Es ist bekannt, betriebstechnische Anlagen (BTA), wie z. B. Bürogebäude, mit Hilfe eines Leittechniksystems zu überwachen und/oder zu steuern. Aufgabe eines solchen Leittechniksystems ist es unter anderem, Klimaanlagen, Heizungsanlagen und Lichtanlagen der betriebstechnischen Anlage zu überwachen, zu steuern und zu regeln. Typischerweise werden dazu speicherprogrammierbare (SPS) oder DDC- (Digital Direct Control) Module als Automationsgeräte mit den Anlagen verbunden. Die einzelnen speicherprogrammierbaren Module sind über ein Bussystem oder unmittelbar mit einer Unterstation, die als PC ausgebildet sein kann, verbunden. Ein Nachteil dieses Leittechniksystems besteht darin, daß eine Systemerweiterung nur mit Komponenten desselben Herstellers oder mit Komponenten möglich ist, die über das gleiche Protokoll kommunizieren können. Ein verbessertes, bekanntes Leittechniksystem ist mit Kommunikationstreibern ausgerüstet, die die firmenspezifischen Protokolle der angeschalteten Automationsgeräte zwar in ein lesbares, aber nicht in ein einheitlich definiertes Format übersetzen. Daher sind zusätzliche Hardware- und Softwareanpassungen, insbesonder bei einer Erweiterung des Systems um Automationsgeräten verschiedener Hersteller, an nachgeschaltete Datenträger oder Datenverarbeitungseinrichtungen unumgänglich.

Aus dem Aufsatz von Häberle et al. "Feldbus minus Funktionsbibliothek" 1995, VDMA, Franfkrut 2, XP002267253 ist eine Standardfunktionabibliothek für die Kommunikation mit wichtigen Feldbussystemen bekannt. Mit einer solchen Standardfunktionsbibliothek ist es möglich, unabhängig vom gewählten Feldbussystem Standarddienste auszuführen. Hierzu wird eine einheitliche Anwenderschnittstelle definiert, in der aus der Vielzahl von Anwenderdiensten verschiedener Feldbussysteme ein vorbestimmter Satz von Standarddiensten zusammengefaßt wird. Aus der Sicht der Anwendersehnittstelle steht somit ein hypothetischer Einheits-Feldbus. Auf diese Weise ist es möglich, Applikationen über ein bestimmtes Feldbussystem laufen zu lassen, auch wenn diese Applikation zunächst für ein anderes Feldbussystem implementiert worden ist. Die Anschaltung der jeweiligen Busteilnehmer an das Feldbussystem erfolgt über die feldbusbezogene Systemsoftware.

DIE US-A-4,800,523 offenbart eine Schnittstellensteuereinrichtung für ein Gerät, mit der eine Vielzahl von Geräten, welche an einen gemeinsamen parallelen Hochgeschwindigkeitsbus angeschlossen sind, gesteuert werden können. Die Schnittstellensteuereinrichtung weist einen Speicher auf, in dem gemeinsame Instruktionen abgelegt sind, um eine Datenübertragung der an den parallelen Bus angeschalteten Geräte durchzuführen.

Der Erfindung liegt daher die Aufgabe zugrunde, ein Verfahren, eine Anlage und eine Unterstation verfügbar zu machen, mit denen eine flexible, einfache und kostengünstige Systemerweiterung durch Anschalten von zu überwachenden und/oder zu steuernden Geräten verschiedener Hersteller an eine Unterstation ermöglicht wird.

Dieses technische Problem löst die Erfindung mit den Verfahrensschritten des Anspruchs 1 sowie den Merkmalen der Ansprüche 5 und 15.

Vorteilhafte Weiterbildungen sind in den Unteransprüchen umschrieben.

Der Grundgedanke der Erfindung liegt darin, eine bidirektionale Protokollumwandlung für jedes an die Unterstation angeschaltete Gerät durchzuführen. Mit anderen Worten sollen die gerätespezifischen, d.h. firmenspezifischen Protokolle in ein einheitlich vordefiniertes, für alle Geräte gleiches Protokoll und umgekehrt das einheitlich definierte Protokoll in das jeweilige gerätespezifische Protokoll übersetzt werden. Der wesentliche Vorteil dieses Konzepts ist darin zu sehen, daß Geräte verschiedener Hersteller an die Unterstation angeschaltet werden können, ohne aufwendige und teuere Hardware- und Softwareanpassungen an der Unterstation vornehmen zu müssen. Erfindungsgemäß müssen hauptsächlich ein vorbestimmter Satz von, das neu angeschaltete Gerät beschreibender Funktionsparametern in der Unterstation gespeichert werden.

Das erfindungsgemäße Verfahren zur Übertragung von Informations- und Steuerdaten zwischen einer Unterstation und daran angeschalteten Geräten - das können Automationsgeräte wie speicherprogrammierbare Komponenten sein, die spezifische Protokolle zur Kommunikation mit der Unterstation anwenden - weist zu diesem Zweck die folgenden Schritte auf:
1. Für jedes angeschaltete Gerät wird in der Unterstation ein vorbestimmter Satz von Funktionsparametern in einer Speichereinrichtung abgelegt. Diese Funktionsparameter beschreiben das funktionale Verhalten des jeweiligen Gerätes, und zwar in einem vom Hersteller unabhängigen Format. Dazu reicht es gewöhnlich aus, daß der Entwickler der Unterstation die Funktionsstruktur des neu anzuschaltenden Geräts vom Gerätehersteller erhält.
2. Es wird ein einheitlicher Befehlssatz zur Abfrage und Steuerung der Geräte sowie ein einheitliches, herstellerunabhängiges Protokoll oder Datenformat definiert. Mit Hilfe des einheitlichen Befehlssatzes ist es möglich, mit herstellerunabhängigen, an die Unterstation angeschalteten Geräten zu kommunizieren. Auf diese Weise wird ein offenes Betriebsüberwachungssystem geschaffen. Dank des einheitlich definierten Datenformats liegen die von verschiedenen Geräten übertragenen Informationsdaten in einem einheitlichen Format vor, das für nachgeschaltete Einrichtungen, wie z. B. eine Datenbank nicht weiter angepaßt werden muß.
3. Unter Ansprechen auf ein durch eine anfordernde Einrichtung, beispielsweise eine Datenbank in Verbindung mit einer Steuereinheit, ausgelöstes Informationsdaten-Abfragesignal des einheitlichen Befehlssatzes wird der zugehörige Funktionsparameter des entsprechenden Gerätes aus der Speichereinrichtung ausgelesen und in einen dem jeweiligen Gerät zugeordneten Kommunikationstreiber geladen. Bei den, das entsprechende Gerät beschreibenden Funktionsparametern kann es sich um Prozeßparameter (z. B. die Vorlauftemperatur einer durch das Gerät zu überwachenden Anlage), eine Temperaturskala oder ein Zeitprogramm handeln.
4. Das abgefragte Gerät überträgt daraufhin seine angeforderten Informationsdaten, z. B. seine aktuelle Vorlauftemperatur, über sein firmenspezifisches Protokoll zum Kommunikationstreiber.
5. Die übertragenen Informationsdaten werden vom Kommunikationstreiber mit Hilfe des einheitlich definierten Datenformats und dem geladenen Funktionsparameter übersetzt. Auf diese Weise wird sichergestellt, daß der Kommunikationstreiber die Informationsdaten eines zugeordneten Gerätes unabhängig vom Hersteller immer in demselben, vordefinierten, einheitlichen Format ausgibt. Zweckmäßigerweise handelt es sich bei dem vordefinierten Datenformat um ein Klartextformat, das z. B. über einen angeschalteten Arbeitsplatzrechner in einer für jedermann lesbaren und verständlichen Form ausgegeben werden kann. Alternativ können die in das einheitliche, vordefinierte Datenformat übersetzten Informationsdaten eines Gerätes in einer Datenbank abgelegt werden.

Sind mehrere Geräte an die Unterstation angeschaltet, so kann die Datenbank alle Geräte oder eine ausgewählte Anzahl von Geräten takt- oder ereignisgesteuert abfragen. Auf diese Weise kann der aktuelle Betriebszustand der Geräte in der Datenbank regelmäßig neu aufgezeichnet werden.

Die erfindungsgemäße Unterstation, mit der die oben geschilderten Vorteile erreicht werden können, weist eine oder mehrere Übersetzungseinrichtungen auf, die jeweils einem Gerät zugeordnet sind. Jede Übersetzungseinrichtung enthält einen Speicher, in dem der vorbestimmte Satz von das zugehörige Gerät beschreibenden Funktionsparametern abgelegt ist, sowie jeweils einen Kommunikationstreiber, der unter Ansprechen auf einen Informationsdaten-Anforderungsbefehl die entsprechenden Funktionsparameter lädt und das zugehörige Gerät veranlaßt, die angeforderten Informationsdaten über sein spezifisches Protokolle zu übertragen. Die Kommunikationstreiber übersetzen die angeforderten Informationsdaten mit Hilfe der geladenen Funktionsparameter in ein vordefiniertes, einheitliches Datenformat, das die Gerätenummer, den angeforderten Parameter und den gemessenen Wert umfassen kann. Die Unterstation umfaßt ferner einen Datenträger zur Aufnahme der im vordefinierten Datenformat dargestellten Informationsdaten.

Eine sogenannte Anwendungsprozeßschnittstelle ist in der Unterstation inplementiert; sie enthält das einheitliche Datenformat, das in vorteilhafter Weise ein Klartextformat ist, und einen einheitlichen Befehlssatz zur Abfrage und Steuerung der Geräte. Der Kommunikationstreiber greift auf diese Anwendungsprozeß-Schnittstelle zu. Je nach Realisierung der Erfindung können die Kommunikationstreiber auch Teil der Anwendungsprozeß-Schnittstelle sein.

Eine Steuereinrichtung übernimmt die Überwachung und Steuerung der Unterstation.

Die Unterstation weist eine Schnittstelle zum Anschalten an ein analoges oder digitales Netzwerk auf. Zweckmäßigerweise ist die Schnittstelle eine sogenannte Euro-ISDN-Schnittstelle, mit der eine digitale Anschaltung an das öffentliche Kommunikationsnetz möglich ist.

Die Unterstation kann über das digitale oder analoge Netzwerk mit einer Leitstation, die ebenfalls eine Datenbank aufweisen kann, verbunden sein. Die Datenbank der Unterstation und die Datenbank der Leitstation können die in dem vordefinierten, einheitlichen Datenformat übersetzten Steuer- und Informationsdaten transparent miteinander austauschen. Dazu benutzen beide Datenbanken eine standardisierte Datenbank-Abfragesprache, beispielsweise die SQL-Datenbank-Abfragesprache.

Die einfache Erweiterung des erfindungsgemäßen Systems mit Geräten verschiedener Herstellern wird dadurch ermöglicht, daß, allgemein gesprochen, der einem bestimmten Gerät zugeordnete Kommunikationstreiber eine Protokollumwandlung vornimmt. Basis dieser Protokollumwandlung ist eine funktionelle Beschreibung der angeschlossenen Anlagen. Das heißt, das herstellungsspezifische Protokoll eines bestimmten Gerätes wird von dem Kommunikationstreiber in ein vordefiniertes, einheitliches Protokoll umgewandelt, das die Informationen eines bestimmten Gerätes in ein für jedermann lesbares, für alle angeschalteten Geräte einheitliches Format übersetzt.

Die Erfindung wird nachfolgend beispielhaft anhand einer Ausführungsform in Verbindung mit den beiliegenden Zeichnungen näher erläutert. Es zeigt:

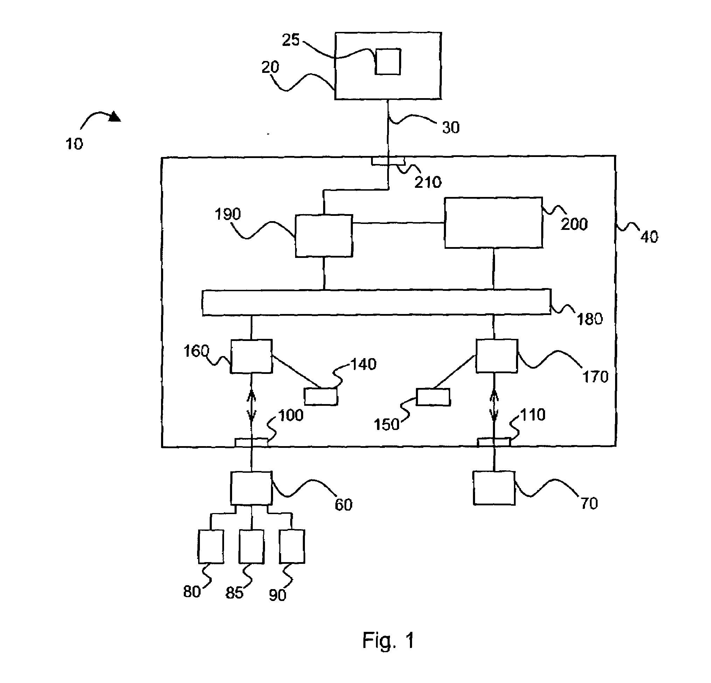

- Fig. 1: ein prinzipielles Blockschaltbild eines Betriebsüberwachungssystems, in dem die Erfindung verwirklicht ist.

Fig. 1 zeigt beispielhaft ein Betriebsüberwachungssystem 10, mit dem eine betriebstechnische Anlage, wie z. B. ein Bürogebäude, überwacht und gesteuert werden kann. Das in Fig. 1 gezeigte Betriebsüberwachungssystem 10 weist eine an einem entfernten Ort aufgestellte Leitstation 20 auf. Die Leitstation 20 verfügt über eine Datenbank 25, die eine standardisierte Datenbank-Abfragesprache, wie z. B. SQL (Structured Query Language), ausführen kann. Die Leitstation 20 ist über ein analoges oder digitales Netzwerk 30 mit einer erfindungsgemäßen Unterstation 40 verbunden. Die Unterstation 40, die man sich auch als Workstation implementiert vorstellen kann, ist in einem nicht dargestellten Bürogebäude aufgestellt. An die Unterstation 40 sind zwei Automationsgeräte 60 und 70 verschiedener Hersteller angeschaltet. Selbstverständlich können je nach Leistungsfähigkeit der Unterstation 40 beliebig viele Automationsgeräte angeschaltet werden. Bei den Automationsgeräten 60 und 70 handelt es sich um speicherprogrammierbare Komponenten oder DDC- (von Digital Direct Control)- Module, mit denen Heizungsanlagen, Lichtanlagen oder Klimaanlagen des zu überwachenden Bürogebäudes gesteuert, geregelt und überwacht werden können. Lediglich zu Erläuterungszwecken sei angenommen, daß das Automationsgerät 60 eine Heizungsanlage und das Automationsgerät 70 eine Lichtanlage steuert, überwacht und regelt. An die Automationsgeräte 60 und 70 sind dazu jeweils drei Feldkomponenten angeschaltet, wobei wir uns nachfolgend der Einfachheit halber nur dem Automationsgerät 60 widmen. Die Feldkomponente 80 ist beispielsweise ein Temperatursensor, die Feldkomponente 85 ein Schalter und die Feldkomponente 90 ein Stellglied oder Steuerventil. Es sei angemerkt, daß die Feldkomponenten auch unmittelbar an die Unterstation 40 angeschaltet werden können. Neben den gezeigten Automationsgeräten 60 und 70 können an die Unterstation alle denkbaren Geräte angeschaltet werden, wie z. B. Kühltruhen, Gefahrenmeldeanlagen, Energieverbrauchszähler oder sogar Aufzüge in Bürogebäude.

Die Unterstation 40 verfügt über zwei serielle Schnittstellen 100 und 110, an die die Automationsgeräte 60 bzw. 70 angeschaltet sind. Jedem angeschalteten Automationsgerät 60 und 70 ist eine Übersetzungseinrichtung zugeordnet. Die dem Automationsgerät 60 zugeordnete Übersetzungseinrichtung weist einen Speicher 140 und einen Kommunikationstreiber 160 auf. In dem Speicher 140 ist ein vorbestimmter Satz von Funktionsparametern abgelegt, der die Funktionsweise oder das Betriebsverhalten des angeschalteten Automationsgerätes 60 beschreibt. Ein Serviceingenieur, der die Unterstation 40 implementiert, muß lediglich die herstellerabhängigen Leistungsmerkmale des anzuschaltenden Automationsgeräts 60 kennen, diese in die entsprechenden Funktionsparameter übersetzen und in dem Speicher 140 ablegen. Keine weiteren Änderungen müssen beim Anschalten eines weiteren Automationsgerätes in der Unterstation 40 vorgenommen werden. Funktionsparameter für eine Heizungsanlage können z. B. die Vorlauftemperatur, die aktuelle Zimmertemperatur, eine definierte Temperaturskala und Zeitprogramme sein, mit denen Zeitschaltuhren der Heizungsanlage überwacht und gesteuert werden können. Die dem Automationsgerät 70 zugeordnete Übersetzungseinrichtung weist einen Speicher 150 und einen Kommunikationstreiber 170 auf, dessen Funktionsweise weiter unten näher erläutert wird. Der Speicher 150 enthält wiederum einen vorbestimmten Satz von Funktionsparametern, die die herstellerspezifischen Leistungsmerkmale des Automationsgerätes 70 wiederspiegeln. Eine sogenannte Anwenderprozeß-Schnittstelle 180 definiert ein einheitlich vorgegebenes Datenformat sowie einen für alle angeschalteten Automationsgeräte 60 und 70 einheitlichen Befehlssatz zur Abfrage und Steuerung der Automationsgeräte 60 und 70. Das einheitlich vordefinierte Datenformat der Anwenderprozeß-Schnittstelle sorgt dafür, daß die von dem Automationsgerät 60 und/oder 70 angeforderten Informationsdaten, wie z. B. die aktuelle Zimmertemperatur, in einem einheitlichen Format bereitgestellt werden. Vorteilhafterweise handelt es sich bei dem einheitlichen Datenformat um ein Klartextformat, das für jedermann lesbar auf einem Display dargestellt werden kann. Das Datenformat kann wie folgt aussehen: [Gerätenummer (); Funktionsparameter (); Meßwert ()]. Je nach Verwirklichung der Erfindung können die Kommunikationstreiber 160 und 170 Bestandteile der Anwenderprozeß-Schnittstelle 180 sein. Die Anwenderprozeß-Schnittstelle 180 kann auch die Funktion einer geeignete Eingabe/Ausgabe-Schnittstelle mit ausführen. Über diese Eingabe/Ausgabe-Schnittstelle werden die im Klartextformat dargestellten Informationsdaten der Automationsgeräte 60 und 70 an eine Datenbank 190 weitergereicht. Steuer- und/oder Informationsdaten die im Klartextformat in der Datenbank 190 abgelegt sind, werden umgekehrt über die Eingabe/Ausgabeschnittstelle zu den jeweiligen Kommunikationstreibern 160 und 170 weitergeleitet. Eine Steuereinheit 200 sorgt beispielsweise zusammen mit einem Parser und einem Taktgeber (beide sind nicht dargestellt) für den richtigen Datenfluß. Anstelle der Datenbank 190 kann auch ein gewöhnlicher Rechner mit den Kommunikationstreibern 160 und 170 verbunden sein. Die SQL-fähige Datenbank 190 ist über eine SQL- Schnittstelle (nicht dargestellt) und eine Euro-ISDN-Schnittstelle 210 an das digitale Fernsprechnetz 30 angeschlossen.

Nachfolgend wird die Funktionsweise der erfindungsgemäßen Unterstation 40 näher beschrieben.

Wie bereits erwähnt, besteht ein wesentlicher erfinderischer Aspekt darin, die Funktionsweise der Automationsgeräte 60 und 70 verschiedener Hersteller in einer standardisierten Form mit Hilfe sogenannter Funktionsparameter zu umschreiben und in den Speichern 140 bzw. 150 abzulegen. Um eine einheitliche und für jedermann lesbare Darstellung der von den Automationsgeräten 60 und 70 angeforderten Informationsdaten gewährleisten zu können, wird ein einheitlich vordefiniertes Datenformat, vorzugsweise ein Klartextformat, definiert und in der Unterstation 40 implementiert, in dem die Informationsdaten der verschiedenen Automationsgeräte 60 und 70 für die Datenbank 190 bereitgestellt werden können. Auf diese Weise ist es möglich, die über herstellerspezifische Protokolle von den Automationsgeräten 60 und 70 übertragenen Informationsdaten in den Kommunikationstreibern 160 und 170 einer einheitlichen, standardisierten Transformationsprozedur zu unterwerfen. Natürlich sind beliebige Datenformate, die den jeweiligen Leistungsmerkmalen der angeschalteten Automationsgeräte angepaßt sind, denkbar.

Es wird nunmehr das folgende Szenario betrachtet: Die Datenbank 190 fragt unter Steuerung der Steuereinheit 200 die augenblickliche Zimmertemperatur in dem Raum X über das Automationsgerät 60 ab. Die Temperatur wird von dem Temperatursensor 80, der an dem Automationsgerät 60 angeschaltet ist, erfaßt. Damit die Datenbank 190 Automationsgeräte verschiedener Hersteller ansprechen kann, wird ein einheitlicher Befehlssatz zur Abfrage und Steuerung der Automationsgeräte 60 und 70 definiert und in der Unterstation 40 implementiert. Ein einheitlicher, für alle angeschalteten Geräte gültiger Befehlssatz.umfaßt beispielsweise folgende Befehle:
1) Get value (Funktionsparameter des jeweiligen Automationsgerätes).
   Mit diesem Befehl wird das zugeordnete Automationsgerät 60 aufgefordert, die angeforderten Informationsdaten (z. B. die aktuelle Zimmertemperatur) über sein spezifisches Protokoll zum Kommunikationstreiber 160 zu übertragen.
2) Set value (gerätespezifische Parameter).
   Mit diesem Befehl werden gerätespezifische Parameter (z. B. neue Vorlauftemperatur) neu festgelegt. Die durch den Befehl "Set value" veranlaßte Übertragung von Steuerdaten von der Datenbank 190 zum Automationsgerät 60, 70 werden mit Hilfe des Kommunikationstreibers 160 bzw. 170 aus dem Klartextformat in das gerätespezifische Format umgesetzt.
3) Init value (Funktionsparameter eines neu angeschalteten Automationsgerätes).
   Mit Hilfe dieses Befehls kann ein weiteres Automationsgerät an die Unterstation 40 angeschaltet werden. Dazu ist es lediglich notwendig, daß in einen weiteren Speicher die spezifischen Funktionsparameter des Automationsgerätes eingegeben werden und ein weiterer Kommunikationstreiber in der Unterstation 40 eingerichtet wird.

Es sei angenommen, daß die Steuereinrichtung 200 in Verbindung mit der Datenbank 190 den Befehl "Get value" (aktuelle Zimmertemperatur) an den Kommunikationstreiber 160 übermittelt. Unter Ansprechen auf den Befehl "Get value" wird der entsprechende Funktionsparameter aus dem Speicher 140 in den Kommunikationstreiber 160 geladen. Das Informationsdaten-Abfragesignal wird vom Kommunikationstreiber 160 in das gerätespezifische Format übersetzt und an das Automationsgerät 60 weitergeleitet. Das abgefragte Automationsgerät 60 überträgt nunmehr den vom Sensor 80 gemessenen Temperaturwert zum Kommunikationstreiber 160. Der Kommunikationstreiber 160 übersetzt anschließend die im gerätespezifischen Format dargestellte, nicht lesbare Temperaturinformation in das vordefinierte, einheitliche Datenformat unter Zuhilfenahme des vorher aus dem Speicher 140 geladenen Funktionsparameters. Nach der Umsetzung des Temperaturwertes liegt an der Eingabe/Ausgabe-Schnittstelle ein vordefiniertes, einheitliches Datenformat vor, und zwar in der Form (Geräte-Nr.: 60; aktuelle Zimmertemperatur: 25°C). Dieses Datenformat wird anschließend in die Datenbank 190 geschrieben.

Eine weitere Besonderheit der im Speicher 140 abgelegten Funktionsparameter besteht darin, daß Grenzwerte für die abzufragenden Funktionsparameter angegeben werden können. So kann z. B. der Funktionsparameter "aktuelle Zimmertemperatur" wie folgt definiert sein: aktuelle Zimmertemperatur - x, aktuelle Zimmertemperatur, aktuelle Zimmertemperatur + x. Auf diese Weise ist es möglich, die Überschreitung eines vorgegebenen Grenzwertes zu erfassen und eine entsprechende Steuerprozedur einzuleiten.

Die SQL-fähige Datenbank 190 ist in der Lage, das zuvor im Klartextformat eingeschriebene Ergebnis betreffend die Informationsdaten des Automationsgerätes 60 über eine SQL-Schnittstelle, die Euro-ISDN-Schnittstelle 210 und das angeschaltete Kommunikationsnetz 30 zur SQL-fähigen Datenbank 25 in der Leitstation 20 zu übertragen. Auf diese Weise erfolgt eine transparente Übertragung der im Klartextformat vorliegenden Informationsdaten des Automationsgerätes 60 von der Eingabe/Ausgabe-Schnittstelle zur Leitstation 20. In umgekehrter Richtung können nun Steuerdaten von der Leitstation 20, die in ihrer Datenbank 25 ebenfalls in dem einheitlich vordefinierten Klartextformat abgelegt sind, über den gleichen Übertragungsweg zur Datenbank 190 in der Unterstation 40 übertragen werden. Die im Klartextformat vorliegenden Steuerdaten, die beispielsweise für das Automationsgerät 60 bestimmt sind, werden im Kommunikationstreiber 160 in das gerätespezifische Format übersetzt und zum Automationsgerät 60 übertragen. Das gerätespezifische Protokoll kann die übermittelten Steuerdaten zur Überwachung und Steuerung des Automationsgerätes 60 aufbereiten.

## Patentansprüche

1. Verfahren zur Übertragung von Informations- und/oder Steuerdaten zwischen einer Unterstation (40) und daran angeschalteten Geräten (60, 70), die über spezifische Protokolle kommunizieren können, mit folgenden Schritten:
a) für jedes angeschaltete Gerät (60, 70) wird in der Unterstation (40) ein vorbestimmter Satz von Funktionsparametern, die das funktionale Verhalten des jeweiligen Gerätes in einem vom Hersteller unabhängigen Format beschreiben, in einer Speichereinrichtung (140, 150) abgelegt;
b) es wird ein einheitlicher Befehlssatz zur Abfrage und Steuerung der Geräte (60, 70) sowie ein einheitliches, herstellerunabhängiges Datenformat definiert;
c) unter Ansprechen auf ein durch eine anfordernde Einrichtung (190, 200) ausgelöstes Informationsdaten-Abfragesignal des einheitlichen Befehlssatzes wird der zugehörige Funktionsparameter des entsprechenden Geräts (60, 70) aus der Speichereinrichtung (140, 150) ausgelesen und in einen, dem jeweiligen Gerät (60, 70) zugeordneten Kommunikationstreiber (160, 170) geladen;
d) das abgefragte Gerät (60, 70) überträgt seine angeforderten Informationsdaten über sein spezifisches Protokoll zum Kommunikationstreiber (160, 170); und
e) die übertragenen Informationsdaten werden vom Kommunikationstreiber (160, 170) mit Hilfe des einheitlich definierten Datenformats und dem geladenen Funktionsparameter übersetzt und zur weiteren Verwendung bereitgestellt.

2. Verfahren nach Anspruch 1, **dadurch gekennzeichnet, daß** das einheitlich definierte, herstellerunabhängige Datenformat ein Klartextformat ist.

3. Verfahren nach Anspruch 1 oder 2, **dadurch gekennzeichnet, daß** die in Schritt e) in das einheitlich definierte Datenformat übersetzten Informationsdaten des abgefragten Geräts (60, 70) in eine Datenbank (190) geschrieben werden und daß die Datenbank (190) die angeschalteten Geräte (60, 70) takt- oder ereignisgesteuert abfragt.

4. Verfahren nach Anspruch 3, **dadurch gekennzeichnet, daß** die Datenbank (190) der Unterstation (40) mit einer in einer übergeordneten Leitstation (20) implemtierten Datenbank (25) mit Hilfe einer vereinbarten Datenbank-Abfragesprache in das einheitlich definierte Datenformat übersetzte Informations- und Steuerdaten austauschen kann.

5. Anlage zur Durchführung des Verfahrens nach den Ansprüchen 1 bis 4, insbesondere zum Überwachen und Steuern von Geräten (60, 70), die über ihre spezifischen Protokolle mit einer Unterstation (40) kommunizieren können, umfassend
wenigstens eine Unterstation (40), an die jeweils eine oder mehrere Geräten (60, 70) angeschaltet sind,
**dadurch gekennzeichnet, daß**
jede Unterstation (40) folgende Merkmale aufweist:
- eine oder mehrere Übersetzungseinrichtungen (140, 160, 180; 150, 170, 180), die jeweils einem Gerät (60; 70) zugeordnet sind, mit jeweils einem Speicher (140; 150), in dem ein vorbestimmter Satz von das zugehörige Gerät (60; 70) in einem vom Hersteller unabhängigen Format beschreibender Funktionsparameter abgelegt ist, und mit jeweils einem Kommunikationstreiber (160; 170), der unter Ansprechen auf einen Informationsdaten-Anforderungsbefehl die entsprechenden Funktionsparameter lädt und das zugehörige Gerät (60; 70) veranlaßt, die angeforderten Informationsdaten über sein spezifische Protokoll zu übertragen, wobei der Kommunikationstreiber (160; 170) die angeforderten Informationsdaten mit Hilfe der geladenen Funktionsparameter in ein vordefiniertes, einheitliches Datenformat übersetzt, und
- einen Datenträger (190) zur Aufnahme der im vordefinierten Datenformat dargestellten Informationsdaten zur Weiterbenutzung.

6. Anlage nach Anspruch 5, **dadurch gekennzeichnet, daß** in der Unterstation (40) eine Schnittstelle (190) implementiert ist, in der das einheitliche Datenformat, das ein Klartextformat ist, und ein einheitlicher Befehlssatz zur Abfrage und Steuerung der Geräte (60; 70) definiert ist.

7. Anlage nach Anspruch 5 oder 6, **dadurch, gekennzeichnet, daß** in der Unterstation (40) eine Steuereinrichtung (200) zur Überwachung und Steuerung der Untersation angeordnet ist.

8. Anlage nach einem der Ansprüche 5 bis 7, **dadurch gekennzeichnet, daß** der Datenträger eine Datenbank (190) ist, die die von den Geräten (60; 70) kommenden Informationsdaten in dem einheitlich vordefinierten Datenformat verwaltet.

9. Anlage nach Anspruch 7, **gekennzeichnet durch** einen Taktgeber, der die Datenbank (190) veranlaßt, vorbestimnmte Informationsdaten von allen oder ausgewählten Geräten (60; 70) takt- oder ereignisgesteuert abzufragen.

10. Anlage nach einem der Ansprüche 5 bis 9, **dadurch gekennzeichnet, daß** die Unterstation eine Schnittstelle (210) zum Anschalten an ein analoges oder digitales Netzwerk (30) aufweist.

11. Anlage nach Anspruch 10, **gekennzeichnet durch** eine übergeordenete, eine Datenbank (25) aufweisende Leitstation (20), mit der die Unterstation (40) über das angeschaltete Netzwerk (30) unter Verwendung einer vereinbarten Datenbank-Abfragesprache kommunizieren kann.

12. Anlage nach Anspruch 11, **dadurch gekennzeichnet, daß** die Datenbank (25) in der Leitstation (20) und die Datenbank (190) in der Unterstation (40) SQL-fähig sind und über jeweilige SQL-Schnittstellen Informations- und/oder Steuerdaten im vordefinierten, einheitlichen Klartextformat austauschen können.

13. Anlage nach einem der Ansprüche 5 bis 12, **dadurch gekennzeichnet, daß** der, einem bestimmten Gerät (60; 70) zugeordnete Kommunikationstreiber (160; 170) die in der Datenbank (190) der Unterstation (40) im einheitlich definierten Datenformat abgelegten Information- und/oder Steuerdaten in ein durch das gerätespezifische Protokoll festgelegtes Format übersetzen und zum Gerät (60; 70) übertragen kann.

14. Anlage nach einem der Ansprüche 5 bis 13,
**dadurch gekennzeichnet, dass**
die Unterstation (40) wenigstens eine serielle Schnittstelle (100, 110) aufweist, an die das Gerät (60, 70) angeschaltet ist.

15. Unterstation für den Einsatz in einer Anlage nach einem der Ansprüche 5 bis 14,
**gekennzeichnet durch** folgende Merkmale:
- eine oder mehrere Übersetzungseinrichtungen (140, 160, 180; 150, 170, 180), die jeweils einem zu überwachenden und/oder zu steuernden Gerät (60),; 70) zugeordnet sind, mit jeweils einem Speicher (140; 150), in dem ein vorbestimmter Satz von das zugehörige Gerät in einem vom Hersteller unabhängigen Format beschreibender Funktionsparameter abgelegt ist, und mit jeweils einem Kommunikationstreiber (160; 170), der unter Ansprechen auf einen Informationsdaten-Anforderungsbefehl den entsprechenden Funktionsparameter lädt und das zugehörige Gerät (60; 70) veranlaßt, die angeforderten Informationsdaten über sein spezifisches Protokoll zu übertragen, wobei der Kommunikationstreiber (160; 170) die angeforderten Informationsdaten in ein vordefiniertes, für alle angeschalteten Geräte (60; 70) einheitliches Datenformat übersetzt, und
- einen Datenträger (190) zur Aufnahme der im vordefinierten, einheitlichen Datenformat dargestellten Informationsdaten zur Weiterbenutzung.

16. Unterstation nach Anspruch 15,
**gekennzeichnet durch**
wenigstens eine serielle Schnittstelle (100, 110) aufweist, an ein zu überwachendes und/oder zu steuerndes Gerät (60, 70) anschaltbar ist.

## Claims

1. Method for transmission of information data and/or control data between a substation (40) and devices (60; 70) connected thereto that can communicate through specific protocols, having the following steps:
a) for each connected device (60; 70), a predetermined set of functional parameters that describe the functional behavior of the relevant device in a manufacturer-independent format is stored in the substation (40) in a memory system (140, 150);
b) a uniform set of commands for querying and controlling the devices (60; 70) and a uniform, manufacturer-independent data format are defined;
c) in response to an information data query signal of the uniform command set issued by a requesting device (190, 200), the associated functional parameter of the relevant device (60; 70) is read out of the memory system (140, 150) and is loaded into a communications driver (160, 170) associated with the relevant device (60; 70);
d) the queried device (60; 70) transmits its requested information data to the communications driver (160, 170) through its specific protocol; and
e) the transmitted information data are translated and prepared by the communications driver (160, 170) for further use with the aid of the uniform defined data format and the loaded functional parameters.

2. Method according to claim 1, **characterized in that** the uniform defined manufacturer-independent data format is a plain text format.

3. Method according to claim 1 or 2, **characterized in that** the information data of the queried device (60; 70), which was translated into the uniform defined data format in step e), is written into a database (190) and **in that** the database (190) queries the connected devices (60; 70) in a clock-controlled or event-controlled manner.

4. Method according to claim 3, **characterized in that** the database (190) of the substation (40) can exchange information and control data, which has been translated into the uniform defined data format, with a database (25) implemented in a higher-level control station (20) with the aid of an agreed-upon database query language.

5. System for carrying out the method according to any one of claims 1 through 4, in particular for monitoring and controlling the devices (60; 70) that can communicate with a substation (40) through their specific protocols, including at least one substation (40), each of which is connected to one or more devices (60; 70), **characterized in that** each substation (40) has the following features:
- one or more translation devices (140, 160, 180; 150, 170, 180), each having associated with it one device (60; 70), and each having a memory (140; 150) in which is stored a predetermined set of functional parameters that describe the functional behavior of the associated device (60; 70) in a manufacturer-independent format, and each having a communications driver (160, 170) that loads the appropriate functional parameters in response to an information data query command and causes the associated device (60; 70) to transmit the requested information data through its specific protocol, wherein the communications driver (160; 170) translates the requested information data into a predefined uniform data format with the aid of the loaded functional parameters, and
- a data medium (190) to record the information data, represented in the predefined data format, for further use.

6. System according to claim 5, **characterized in that** the substation (40) has implemented in it an interface (190) in which the uniform data format, which is a plain text format, and a uniform command set for querying and controlling the devices (60; 70), are defined.

7. System according to claim 5 or claim 6, **characterized in that** the substation (40) has located in it a control device (200) for monitoring and controlling the substation.

8. System according to any one of claims 5 through 7, **characterized in that** the data medium is a database (190) that manages the information data arriving from the devices (60; 70) in the uniform predefined data format.

9. System according to claim 7, **characterized by** a clock generator that causes the database (190) to request predefined information from all or selected devices (60; 70) in a clock-controlled or event-controlled manner.

10. System according to any one of claims 5 through 9, **characterized in that** the substation (40) has an interface (210) for connecting to an analog or digital network (30).

11. System according to claim 10, **characterized by** a higher-level control station (20) that has a database (25), wherein the substation (40) can communicate with said control station through the connected network (30) using an agreed-upon database query language.

12. System according to claim 11, **characterized in that** the database (25) in the control station (20) and the database (190) in the substation (40) are SQL-capable and can exchange information data and/or control data through respective SQL interfaces in the predefined uniform plain text format.

13. System according to any one of claims 5 through 12, **characterized in that** the communications driver (160; 170) associated with a certain device (60; 70) can translate the information data and/or control data stored in a uniform defined data format in the database (190) of the substation (40) into a format prescribed by the device-specific protocol and transmit said data to the device (60; 70).

14. System according to any one of claims 5 through 13, **characterized in that** the substation (40) has at least one serial interface (100, 110), to which the device (10, 70) is connected.

15. Substation for use in a system according to any one of claims 5 through 14, **characterized by** the following features:
- one or more translation devices (140, 160, 180; 150, 170, 180), each having associated with it one device (60; 70) to be monitored and/or controlled, each having a memory (140; 150) in which is stored a predetermined set of functional parameters that describe the associated device (60; 70) in a manufacturer-independent format, and each having a communications driver (160; 170) that loads the appropriate functional parameters in response to an information data query command and causes the associated device (60; 70) to transmit the requested information data through its specific protocol, wherein the communications driver (160; 170) translates the requested information data into a predefined data format that is uniform for all the connected devices (60; 70), and
- a data medium (190) to record the information data, represented in the predefined, uniform data format, for further use.

16. Substation according to claim 15, **characterized by** at least one serial interface (100, 110), to which may be connected a device (60; 70) that is to be monitored and/or controlled.

## Revendications

1. Procédé de transmission de données d'information et/ou de commande entre un poste secondaire (40) et des appareils (60, 70) raccordés à ce dernier et pouvant communiquer par l'intermédiaire de protocoles spécifiques, selon les étapes suivantes :
a) pour chaque appareil (60, 70) raccordé, stockage, dans un dispositif de mémoire (140, 150) du poste secondaire (40), d'un jeu prédéterminé de paramètres de fonctionnement décrivant le comportement fonctionnel de l'appareil respectif dans un format indépendant du fabricant ;
b) définition d'un jeu de commandes normalisé pour l'interrogation et la commande des appareils (60, 70) ainsi que d'un format de données normalisé, indépendant du fabricant ;
c) lecture, dans le dispositif de mémoire (140, 150), du paramètre de fonctionnement associé de l'appareil (60, 70) correspondant, en réponse à un signal d'interrogation de données d'information du jeu de commandes normalisé déclenché par un dispositif requérant (190, 200), et chargement dudit paramètre de fonctionnement dans un pilote de communication (160, 170) associé à l'appareil (60, 70) respectif ;
d) transmission, par l'appareil (60, 70) interrogé, de ses données d'information requises au pilote de communication (160, 170) par l'intermédiaire de son protocole spécifique ; et
e) traduction des données d'information transmises par le pilote de communication (160, 170) à l'aide du format de données normalisé et du paramètre de fonctionnement chargé, et mise à disposition desdites données d'information pour une utilisation ultérieure.

2. Procédé selon la revendication 1, **caractérisé en ce que** le format de données normalisé et indépendant du fabricant est un format de texte en clair.

3. Procédé selon la revendication 1 ou 2, **caractérisé en ce que** les données d'information de l'appareil (60, 70) interrogé, traduites dans le format de données normalisé à l'étape e), sont écrites dans une base de données (190), et **en ce que** la base de données (190) interroge les appareils (60, 70) raccordés en fonction d'impulsions d'horloge ou d'évènements.

4. Procédé selon la revendication 3, **caractérisé en ce que** la base de données (190) du poste secondaire (40) peut échanger, à l'aide d'un langage d'interrogation de base de données convenu, des données d'information et de commande traduites dans le format de données normalisé avec une base de données (25) implantée dans un poste de conduite centralisé de hiérarchie supérieure.

5. Installation pour la mise en oeuvre du procédé selon les revendications 1 à 4, notamment pour la surveillance et la commande d'appareils (60, 70) pouvant communiquer avec un poste secondaire (40) par l'intermédiaire de leurs protocoles spécifiques, comprenant
au moins un poste secondaire (40) auquel sont raccordés un ou plusieurs appareils (60, 70) respectivement,
**caractérisée en ce que**
chaque poste secondaire (40) présente les caractéristiques suivantes:
- un ou plusieurs dispositifs de traduction (140, 160, 180 ; 150, 170, 180), respectivement associés à un appareil (60 ; 70), comportant chacun une mémoire (140; 150) dans laquelle est stocké un jeu prédéterminé de paramètres de fonctionnement décrivant l'appareil (60; 70) correspondant dans un format indépendant du fabricant, et comportant chacun un pilote de communication (160 ; 170) qui, en réponse à une commande de requête de données d'information, charge les paramètres de fonctionnement correspondants et amène l'appareil (60 ; 70) associé à transmettre les données d'information requises par l'intermédiaire de son protocole spécifique, le pilote de communication (160; 170) traduisant les données d'information requises dans un format de données normalisé prédéfini à l'aide des paramètres de fonctionnement chargés, et
- un support de données (190) destiné à recevoir les données d'information représentées dans le format de données prédéfini pour une utilisation ultérieure.

6. Installation selon la revendication 5, **caractérisée en ce que** le poste secondaire (40) comprend une interface (190) dans laquelle sont définis le format de données normalisé qui est un format de texte en clair, et un jeu de commandes normalisé pour l'interrogation et la commande des appareils (60; 70).

7. Installation selon la revendication 5 ou 6, **caractérisée en ce que** le poste secondaire (40) comprend un dispositif de commande (200) pour la surveillance et la commande du poste secondaire.

8. Installation selon l'une des revendications 5 à 7, **caractérisée en ce que** le support de données est une base de données (190) qui gère les données d'information provenant des appareils (60; 70) dans le format de données normalisé prédéfini.

9. Installation selon la revendication 7, **caractérisée par** une horloge qui amène la base de données (190) à interroger des données d'information prédéterminées de tous les appareils (60 ; 70) ou d'appareils choisis, en fonction d'impulsions d'horloge ou d'évènements.

10. Installation selon l'une des revendications 5 à 9, **caractérisée en ce que** le poste secondaire comporte une interface (210) pour le raccordement à un réseau (30) analogique ou numérique.

11. Installation selon la revendication 10, **caractérisée par** un poste de conduite centralisé (20) de hiérarchie supérieure comportant une base de données (25) avec lequel le poste secondaire (40) peut communiquer par l'intermédiaire du réseau (30) raccordé en utilisant un langage d'interrogation de base de données convenu.

12. Installation selon la revendication 11, **caractérisée en ce que** la base de données (25) intégrée au poste de conduite centralisé (20) et la base de données (190) intégrée au poste secondaire (40) sont exécutables SQL et capables d'échanger, par des interfaces SQL respectives, des données d'information et/ou de commande dans le format de texte en clair normalisé prédéfini.

13. Installation selon l'une des revendications 5 à 12, **caractérisée en ce que** le pilote de communication (160 ; 170) affecté à un appareil donné (60 ; 70) est apte à traduire les données d'information et/ou de commande stockées dans la base de données (190) du poste secondaire (40) dans un format de données normalisé, dans un format défini par le protocole spécifique à l'appareil et à les transmettre à l'appareil (60 ; 70).

14. Installation selon l'une des revendications 5 à 13, **caractérisée en ce que** le poste secondaire (40) présente au moins une interface sérielle (100, 110) à laquelle l'appareil (60, 70) est raccordé.

15. Poste secondaire destiné à être utilisé dans une installation selon l'une des revendications 5 à 14, **caractérisé par** les caractéristiques suivantes :
- un ou plusieurs dispositifs de traduction (140, 160, 180; 150, 170, 180) respectivement associés à un appareil (60 ; 70) à surveiller et/ou à commander, comportant chacun une mémoire (140 ; 150) dans laquelle est stocké un jeu prédéterminé de paramètres de fonctionnement décrivant l'appareil (60 ; 70) correspondant dans un format indépendant du fabricant, et comportant chacun un pilote de communication (160; 170) qui, en réponse à une commande de requête de données d'information, charge le paramètre de fonctionnement correspondant et amène l'appareil (60 ; 70) associé à transmettre les données d'information requises par l'intermédiaire de son protocole spécifique, le pilote de communication (160; 170) traduisant les données d'information requises dans un format de données normalisé pour l'ensemble des appareils (60; 70) raccordés, et
- un support de données (190) destiné à recevoir les données d'information représentées dans le format de données normalisé pour une utilisation ultérieure.

16. Poste secondaire selon la revendication 15,
**caractérisé par**
au moins une interface sérielle (100, 110) à laquelle peut être raccordé un appareil (60, 70) à surveiller et/ou à commander.
